(19) Europäisches Patentamt
European Patent Office
Office européen des brevets

(11) **EP 2 639 864 B1**

(12) **EUROPEAN PATENT SPECIFICATION**

(45) Date of publication and mention
of the grant of the patent:
**22.06.2016 Bulletin 2016/25**

(51) Int Cl.:
*H01M 4/48* (2006.01)         *H01M 4/485* (2010.01)
*H01M 4/58* (2006.01)         *H01M 10/36* (2006.01)
*H01M 2/16* (2006.01)         *H01M 4/72* (2006.01)

(21) Application number: **13151720.3**

(22) Date of filing: **17.01.2013**

(54) **Lithium secondary battery**

Lithium-Sekundärbatterie

Batterie secondaire au lithium

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.03.2012 KR 20120025757**

(43) Date of publication of application:
**18.09.2013 Bulletin 2013/38**

(73) Proprietor: **Samsung SDI Co., Ltd.
Yongin-si, Gyeonggi-do (KR)**

(72) Inventors:
• **Ishida, Sumihito
Yongin-si (Gyeonggi-do) (KR)**
• **An, Jungwoo
Yongin-si (Gyeonggi-do) (KR)**

• **Song, Euihwan
Yongin-si (Gyeonggi-do) (KR)**

(74) Representative: **Santarelli
49, avenue des Champs-Elysées
75008 Paris (FR)**

(56) References cited:
**JP-A- 2006 073 259      US-A1- 2009 087 742**

• **MANJUNATHA H ET AL: "Electrode materials for
aqueous rechargeable lithium batteries",
JOURNAL OF SOLID STATE
ELECTROCHEMISTRY ; CURRENT RESEARCH
AND DEVELOPMENT IN SCIENCE AND
TECHNOLOGY, SPRINGER, BERLIN, DE, vol. 15,
no. 3, 12 June 2010 (2010-06-12), pages 431-445,
XP019884197, ISSN: 1433-0768, DOI:
10.1007/S10008-010-1117-6**

**Description**

BACKGROUND

Field

The present invention relates to a lithium secondary battery.

Description of the Related Technology

Lithium secondary batteries use lithium metal oxides capable of intercalating or deintercalating lithium ions as positive electrode active materials, and use lithium metal, a lithium alloy, (crystalline or amorphous) carbon or a carbon composite as negative electrode active materials. A positive electrode plate or negative electrode plate is formed by coating current collectors with the active materials in an appropriate thickness or length, or by coating the active materials in a film shape. An insulating separator is disposed between the positive electrode plate and the negative electrode plate, and is rolled together or stacked to form an electrode collector. The electrode collector is put in a can or a container similar thereto, and a lithium secondary battery is then prepared by injecting an electrolyte, in which a lithium salt is dissolved in an organic solvent, inside the case.

An average discharge voltage of the lithium secondary battery is usually in the range of from about 3.6 V to about 3.7 V. An electric power higher than those of other alkaline batteries, Ni-MH batteries, or Ni-Cd batteries may be obtained. However, the presence of an electrolyte, which is electrochemically stable in a charge and discharge voltage of 0 V to 4.2 V, is required in order to obtain the foregoing high driving voltage. For this reason, a non-aqueous electrolyte has been used in the past, in which a lithium salt, such as $LiPF_6$, $LiBF_4$, and $LiClO_4$, is added as a lithium ion source to a non-aqueous carbonate-based solvent, such as ethylene carbonate, dimethyl carbonate, and diethyl carbonate. However, the non-aqueous electrolyte has significantly lower ionic conductivity than that of an aqueous electrolyte used in a Ni-MH battery or Ni-Cd battery, and thus, battery characteristics may deteriorate during high-rate charge and discharge.

US patent application US 2009/087742 describes a lithium secondary battery based on an aqueous electrolyte containing a lithium salt, comprising a positive electrode active material, which can be $LiFePO_4$ and a negative electrode active material which can be $Li_4Ti_5O_2$.

Japanese patent application JP 2006/073259 describes a lithium secondary battery, wherein the positive active electrode material is $Li_xFe_{1-y}MyPO_4$, $0.85 \leq x \leq 1.2$ and $0 \leq y \leq 0.5$, in particular $LiFe_{0.85}Mn_{0.15}PO_4$.

SUMMARY

An aspect of the present invention, illustrated by its embodiments, provides a lithium secondary battery having high stability and high energy density at an average voltage of 2 V.

According to the invention, a lithium secondary battery includes a positive electrode, a negative electrode, a separator disposed between the positive electrode and the negative electrode, and an electrolyte, wherein the positive electrode includes one or more positive electrode active materials selected from the group consisting of $LiFe_xM_yPO_4$, $Li_2Fe_xMyP_2O_7$, $Li_3Fe_xM_y(PO_4)_3$, and $LiFe_xMyO_2$, and coated on at least one surface of a positive current collector, where M is at least one or more selected from the group consisting of cobalt (Co), nickel (Ni), manganese (Mn), aluminum (Al), tin (Sn), and antimony (Sb), $0 \leq x \leq 1$, and $0 \leq y < 1$, wherein the negative electrode includes one or more negative electrode active materials selected from the group consisting of $Li_4(T_ipN_q)_5O_{12}$ and $Li_2(Ti_pN_q)_3O_7$, and coated on at least one surface of a negative current collector, where N is at least one or more selected from the group consisting of Co, Ni, Mn, Al, Sn, and Sb, $0 < p \leq 1$, and $0 \leq q < 1$, and wherein the electrolyte includes a lithium (Li) ion-containing aqueous solution.

The invention is characterized in that the coating of the positive electrode comprising the positive electrode active material further includes one or more conductive agents selected from the group consisting of cobalt, nickel or copper, and cobalt oxide.

The coating of the negative electrode comprising the negative electrode active material further includes one or more conductive agents selected from the group consisting of cobalt, nickel or copper, and cobalt oxide.

The current collector is of the same type in the positive electrode and in the negative electrode. Thus we will hereafter refer to a current collector, meaning we refer to the positive current collector and/or the negative current collector. The current collector may have a mesh shape.

The current collector may include a part comprising a plurality of pores having a diameter of about 0.1 mm to about 0.6 mm, the pores being capable of housing the positive electrode active material or the negative electrode active material. In the description "about 0.1" means value "0.1" and values around 0.1 (excluding 0.1). If so, the negative or positive electrode comprises a current collector including a plurality of pores and a negative or positive electrode active material housed in the pores.

The current collector may be an aluminum foil, which usually mainly comprises aluminum, preferably consists of aluminum.

The thickness of the positive electrode is usually in the range of from about 0.1 mm to about 3.0 mm.

Independently or not, the thickness of the negative electrode is usually in the range of from about 0.1 mm to about 3.0 mm.

The electrolyte may include LiOH.

In this case, the electrolyte may further include KOH and/or NaOH.

The LiOH concentration in the electrolyte is preferably in the range of of from about 1 mol/L to about 6 mol/L.

The separator may be a non-woven fabric.

The separator has preferably a polyolefin-based material surface which was treated by one selected from the group consisting of a plasma treatment, a corona discharge treatment, a sulfonation treatment, and an acrylic acid graft treatment.

The positive electrode active material is preferably chosen from the group consisting of $LiFePO_4$, $LiFePO_4$-CoO, and $LiFe_{0.98}Sn_{0.02}PO_4$.

The negative electrode active material is preferably chosen from the group consisting of $Li_4Ti_5O_{12}$, $Li_4Ti_5O_{12}$-CoO, and $Li_4Ti_{4.98}Al_{0.02}O_{12}$.)

## DETAILED DESCRIPTION

Hereinafter, the present invention and its related embodiments will be described in more detail.

The lithium secondary battery according to an embodiment of the invention includes a positive electrode, a negative electrode, a separator disposed between the positive electrode and the negative electrode, and an electrolyte, wherein the positive electrode includes one or more positive electrode active materials selected from the group consisting of $LiFe_xM_yPO_4$, $Li_2Fe_xM_yP_2O_7$, $Li_3Fe_xM_y(PO_4)_3$, and $LiFe_xM_yO_2$, coated on at least one surface of a positive current collector, where M is at least one or more selected from the group consisting of cobalt (Co), nickel (Ni), manganese (Mn), aluminum (Al), tin (Sn), and antimony (Sb), $0 < x \leq 1$, and $0 \leq y < 1$, and wherein the coating of the positive electrode comprising positive electrode active material includes one or more conductive agents selected from the group consisting of Co, Ni, Cu, and cobalt oxide, the negative electrode includes one or more negative electrode active materials selected from the group consisting of $Li_4(Ti_pN_q)_5O_{12}$ and $Li_2(Ti_pN_q)_3O_7$, coated on at least one surface of a negative current collector, where N is at least one or more selected from the group consisting of Co, Ni, Mn, Al, Sn, and Sb, $0 < p \leq 1$, and $0 \leq q < 1$, and

the electrolyte includes a lithium (Li) ion-containing aqueous solution and the separator is a non-woven fabric.

A positive electrode plate and a negative electrode plate of the lithium secondary battery are usually prepared by using a $LiFePO_4$ (LFP) positive electrode active material and a lithium titanate oxide (LTO) negative electrode active material. Those active materials are advantageously not oxidative-decomposed in water. Furthermore, the lithium secondary battery according to the invention uses a lithium hydroxide aqueous solution as an electrolyte and thus, may function as a secondary battery without using a typical organic-based electrolyte. Since this lithium secondary battery has advantageously more improved stability in comparison to the case that a typical organic electrolyte is used, safety parts may be removed in the secondary battery and as a result, low cost and light weight may advantageously be obtained.

According to the invention, an aqueous-based lithium ion alkaline electrolyte is used in the lithium secondary battery and thus, the thickness of any of the electrodes may be comprised in the range of from about 0.1 mm to about 3.0 mm. Preferably, the thickness of said electrode is from about 0.5 mm to about 1.5 mm. When compared with the thickness of a typical electrode which is of about 0.15 mm, the electrode according to the invention has advantageously a thickness which is three times or more thick. Therefore, the volume occupied by the separator and the current collector, which have no influence on the capacity of the battery, may be advantageously reduced while the electrode of the lithium secondary battery of the invention is thicker. As a result, a lithium secondary battery having high safety and the ability to obtain high energy density may advantageously be provided according to the invention.

According to a preferred embodiment, the lithium secondary battery comprises positive electrode and negative electrode current collectors having pores formed therein, in order to improve adhesiveness between the electrode current collectors and the active materials. Preferably, the size of the pores is in the range of from about 0.1 mm to about 0.6 mm. It is believed that, since the adhesiveness of the active materials may decrease when the size of the pores is about 0.1 mm or less, there may be no meaning of using the electrode collectors having the pores formed therein. It is also believed that, when the size of the pores is about 0.6 mm or more, coating of a slurry may be difficult and uniformity of the electrode may decrease.

When electrode collectors having no pores formed therein are used, electrode collectors having a roughness in the range of from about 0.05 mm to about 0.6 mm may be used. It is believed that, when the roughness of the electrode collectors is about 0.05 mm or less, battery resistance may increase because adhesiveness with respect to electrode coating portions is poor and detachment is facilitated. It is believed that when the roughness of the electrode collectors is about 0.6 mm or more, coating of a slurry may be difficult and uniformity of the electrode may decrease.

Hereinafter, examples and comparative examples of the present embodiments are described below. However, the following examples are merely presented to exemplify the present embodiments, and the scope of the present embodiments is not limited thereto.

Reference Example 1

Preparation of Positive Electrode Plate

$Li_2CO_3$, $FeC_2O_4$-$H_2O$, and $HN_4H_2PO_4$ manufactured by Aldrich were mixed to prepare a pellet form. The mixture having a pellet form was sintered at 600°C for 24 hours in a nitrogen ($N_2$) atmosphere to synthesize $LiFePO_4$. The $LiFePO_4$ was ground to 1 $\mu$m or less by using a ball mill. A positive electrode active material slurry was prepared by mixing 85 wt% of the ground $LiFePO_4$, 5 wt% of acetylene black (AB, Denka), and 10 wt% of polyvinylidene fluoride (PVDF, Kureha) in a solvent (N-methylpyrrolidone (NMP)). One side of a 15 $\mu$m thick aluminum foil was coated with the positive electrode active material slurry. The coated aluminum foil was dried at 100°C and then pressed. A density of a positive electrode active material coated area pressed in the coated aluminum foil was 1.5 g/cc and a positive electrode plate having a positive electrode active material coating thickness of 150 $\mu$m was prepared.

Preparation of Negative Electrode Plate

$TiO_2$ and $CH_3COOLi$ manufactured by Aldrich were mixed to prepare a pellet form. The mixture having a pellet form was sintered at 800°C for 5 hours in an argon atmosphere to synthesize $Li_4Ti_5O_{12}$. The $Li_4Ti_5O_{12}$ was ground to 1 $\mu$m or less by using a ball mill. A negative electrode active material slurry was prepared by mixing 85 wt% of the ground $Li_4Ti_5O_{12}$, 5 wt% of AB (Denka), and 10 wt% of PVDF (Kureha) in a solvent (NMP). One side of a 15 $\mu$m thick aluminum foil was coated with the negative electrode active material slurry. The coated aluminum foil was dried at 100°C and then pressed. A density of a negative electrode active material coated area pressed in the coated aluminum foil was 1.5 g/cc and a negative electrode plate having a negative electrode active material coating thickness of 150 $\mu$m was prepared.

Preparation of Electrolyte including Li ions

LiOH (Aldrich) was dissolved in a distilled water to prepare a Li ion aqueous-based electrolyte having a concentration of 3 mol/L.

Preparation of Separator

A 50 $\mu$m thick non-woven fabric formed of cellulose was used as a separator. As known by the one skilled in the art, since this non-woven fabric had a water wetting property and water may thus pass through the non-woven fabric, another Li-ion aqueous-based electrolyte could be used in which ionic conductivity and electrical stability would be improved.

Preparation of Electrode Assembly

The separator was disposed between the prepared positive electrode and negative electrode plates, and then wound to prepare an electrode assembly having a jelly-roll shape.

Preparation of Lithium Secondary Battery

The jelly-roll shaped electrode assembly together with the electrolyte was put in an electrode assembly accommodating part and sealed to complete a lithium secondary battery. The electrode assembly accommodating part included a cylindrical can having an opening formed at one side thereof and a cap plate covering the opening. However, the present embodiments are not limited to the foregoing shapes of the electrode assembly accommodating part; for example, the one skilled in the art could have used a prismatic can, or the electrode assembly accommodating part could have had a pouch shape.

Reference Example 2

SnO was added to the $LiFePO_4$ positive electrode active material in Reference Example 1. As a result,

$LiFe_{0.98}Sn_{0.02}PO_4$ including 2% Sn was prepared as a positive electrode active material in Reference Example 2. A lithium secondary battery was prepared in the same manner in Reference Example 1 except that a positive electrode active material in Reference Example 2 was $LiFe_{0.98}Sn_{0.02}PO_4$.

Reference Example 3

Al was added to the $Li_4Ti_5O_{12}$ negative electrode active material in Reference Example 1. As a result, $Li_4Ti_{4.98}Al_{0.02}O_{12}$ including 2% Al was prepared as a negative electrode active material in Reference Example 3. A lithium secondary battery was prepared in the same manner as Reference Example 1 except that a negative electrode active material in Reference Example 3 was $Li_4Ti_{4.98}Al_{0.02}O_{12}$.

Example 4

The $LiFePO_4$ positive electrode active material in Reference Example 1 was ground and impregnated with a cobalt hydroxide aqueous solution, and then filtered. Thereafter, the product thus obtained was sintered at 500°C in a nitrogen ($N_2$) atmosphere to prepare cobalt hydroxide coated $LiFePO_4$-CoO. As a result, a lithium secondary battery was prepared in the same manner as Reference Example 1 except that a positive electrode active material in Example 4 was $LiFePO_4$-CoO.

Reference Example 5

The $Li_4Ti_5O_{12}$ negative electrode active material in Reference Example 1 was ground and impregnated with a cobalt hydroxide aqueous solution, and then filtered.
Thereafter, the product thus obtained was sintered at 500°C in a nitrogen ($N_2$) atmosphere to prepare cobalt hydroxide coated $Li_4Ti_5O_{12}$-CoO. As a result, a lithium secondary battery was prepared in the same manner as Reference Example 1 except that a negative electrode active material in Reference Example 5 was $Li_4Ti_5O_{12}$-CoO.

Reference Example 6

A lithium secondary battery was prepared in the same manner as Reference Example 1 except that a 25 $\mu$m thick aluminum current collector having a plurality of pores with a diameter of 0.5 mm was used instead of a 15 $\mu$m thick aluminum current collector having the positive electrode active material and the negative electrode active material coated thereon in Reference Example 1.

Reference Example 7

A lithium secondary battery was prepared in the same manner as Reference Example 1 except that each coating thickness of positive electrode coating portion and negative electrode coating portion was 500 $\mu$m.

Reference Example 8

A lithium secondary battery was prepared in the same manner as Reference Example 1 except that 5% of potassium hydroxide was added to an electrolyte.

Reference Example 9

A lithium secondary battery was prepared in the same manner as Reference Example 1 except that a concentration of lithium hydroxide ions in an electrolyte was 5 mol/L.

Reference Example 10

A lithium secondary battery was prepared in the same manner as Reference Example 1 except that a separator material was selected as polyethylene (PE) among polyolefin-based materials and a plasma treatment for sulfonation (-$SO_4H$) was performed on a surface of the PE. The plasma treatment was performed by ultrasonic irradiation of a sulfuric acid ($H_2SO_4$) having a concentration of 6M on the polyolefin-based material at 50°C and the polyolefin-based material was left standing for 1 hour during the plasma treatment. Thereafter, the polyolefin-based material thus prepared was washed with water and dried.

Comparative Example 1

A lithium secondary battery was prepared in the same manner as Example 1 except that an organic-based electrolyte (1.0 mol/L $LiPF_6$ in EC/EMC = 1:1) was used as an electrolyte.

Comparative Example 2

A lithium secondary battery was prepared in the same manner as Example 1 except that $LiCoO_2$ was used as a positive electrode active material.

Comparative Example 3

A lithium secondary battery was prepared in the same manner as Example 1 except that graphite was used as a negative electrode active material.

Comparative Example 4

A lithium secondary battery was prepared in the same manner as Example 1 except that a 25 $\mu$m thick polyethylene (PE) microporous layer was used as a separator.

Comparative Example 5

A lithium secondary battery was prepared in the same manner as Example 1 except that each thickness of positive electrode active material and negative electrode active material was 500 $\mu$m and an organic-based electrolyte (1.0 mol/L $LiPF_6$ in EC/EMC = 1:1) was used as an electrolyte.

Table 1

| | Positive electrode active material (thickness) | Negative electrode active material (thickness) | Current collector (thickness) | Electrolyte (concentration) | Separator |
|---|---|---|---|---|---|
| Reference Example 1 | $LiFePO_4$ (150$\mu$m) | $Li_4Ti_5O_{12}$ (150$\mu$m) | Al (15$\mu$m) | LiOH (3 mol/L) | Non-woven fabric |
| Reference Example 2 | $LiFe_{0.98}Sn_{0.02}P O_4$ (150$\mu$m) | $Li_4Ti_5O_{12}$ (150$\mu$m) | Al (15$\mu$m) | LiOH (3 mol/L) | Non-woven fabric |
| Reference Example 3 | $LiFePO_4$ (150$\mu$m) | $Li_4Ti_{4.98}Al_{0.02}O_{12}$ (150$\mu$m) | Al (15$\mu$m) | LiOH (3 mol/L) | Non-woven fabric |
| Example 4 | $LiFePO_4$-CoO (150$\mu$m) | $Li_4Ti_5O_{12}$ (150$\mu$m) | Al (15$\mu$m) | LiOH (3 mol/L) | Non-woven fabric |
| Reference Example 5 | $LiFePO_4$ (150$\mu$m) | $Li_4Ti_5O_{12}$-CoO (150$\mu$m) | Al (15$\mu$m) | LiOH (3 mol/L) | Non-woven fabric |
| Reference Example 6 | $LiFePO_4$ (150$\mu$m) | $Li_4Ti_5O_{12}$ (150$\mu$m) | Al (25$\mu$m) | LiOH (3 mol/L) | Non-woven fabric |
| Reference Example 7 | $LiFePO_4$ (500$\mu$m) | $Li_4Ti_5O_{12}$ (500$\mu$m) | Al (15$\mu$m) | LiOH (3 mol/L) | Non-woven fabric |
| Reference Example 8 | $LiFePO_4$ (150$\mu$m) | $Li_4Ti_5O_{12}$ (150$\mu$m) | Al (15$\mu$m) | LiOH+KOH (3 mol/L) | Non-woven fabric |
| Reference Example 9 | $LiFePO_4$ (150$\mu$m) | $Li_4Ti_5O_{l2}$ (150$\mu$m) | Al (15$\mu$m) | LiOH (5 mol/L) | Non-woven fabric |
| Reference Example 10 | $LiFePO_4$ (150$\mu$m) | $Li_4Ti_5O_{12}$ (150$\mu$m) | Al (15$\mu$m) | LiOH (3 mol/L) | PE (-$SO_4$H) |
| Comparative Example 1 | $LiFePO_4$ (150$\mu$m) | $Li_4Ti_5O_{12}$ (150$\mu$m) | Al (15$\mu$m) | $LiPF_6$ (1 mol/L) | Non-woven fabric |

(continued)

|  | Positive electrode active material (thickness) | Negative electrode active material (thickness) | Current collector (thickness) | Electrolyte (concentration) | Separator |
|---|---|---|---|---|---|
| Comparative Example 2 | $LiCoO_2$ (150$\mu$m) | $Li_4Ti_5O_{12}$ (150$\mu$m) | Al (15$\mu$m) | LiOH (3 mol/L) | Non-woven fabric |
| Comparative Example 3 | $LiFePO_4$ (150$\mu$m) | Graphite (150$\mu$m) | Al (15$\mu$m) | LiOH (3 mol/L) | Non-woven fabric |
| Comparative Example 4 | $LiFePO_4$ (150$\mu$m) | $Li_4Ti_5O_{12}$ (150$\mu$m) | Al (15$\mu$m) | LiOH (3 mol/L) | PE |
| Comparative Example 5 | $LiFePO_4$ (500$\mu$m) | $Li_4Ti_5O_{12}$ (500$\mu$m) | Al (15$\mu$m) | $LiPF_6$ (1 mol/L) | Non-woven fabric |

The following Table 2 is the test results of battery characteristics of Example 4 and Reference Examples 1 to 3 and 5 to 10 and Comparative Examples 1 to 5.

Method of Testing Battery Characteristics of Lithium Secondary battery

The lithium secondary battery was charged at a constant current of 200 mA and the charge was terminated at a voltage of the lithium secondary battery of 2.5 V. The charged lithium secondary battery was discharged at a constant current of 200 mA and the discharge was terminated at a voltage of the lithium secondary battery of 1.5 V. The initial capacity of the lithium secondary battery was determined at this time.

The lithium secondary battery was charged at a constant current of 200 mA and the charge was terminated at a voltage of the lithium secondary battery of 2.5 V. Capacity of the battery was measured when the charged lithium secondary battery was discharged at a current of 400 mA until the voltage reached 1.5 V. The measured results of the discharge power (%) were thus determined as high-rate discharge characteristics.

The lithium secondary battery was charged at a current of 4000 mA until the voltage reached 2.5 V and discharged at a current of 4000 mA until the voltage reached 1.5 V, and the foregoing charge and discharge cycle was repeated 1000 times. After 1000 cycles of charge and discharge, the residual capacity with respect to the initial capacity of the lithium secondary battery was measured.

The lithium secondary battery was charged at a constant current of 200 mA and the charge was terminated at a battery voltage of 2.5 V. Thereafter, the battery in a charged state was put in a constant temperature bath and the temperature thereof was increased to 300°C at a heating rate of 5°C/min while a surface temperature of the battery was measured. Thermal safety was measured while checking unexpected heat generation until the temperature of the constant temperature bath reached 300°C. The criteria are "o" for "passed" and "x" for "failed".

Table 2

|  | Initial capacity | Discharge power | 1000 cycle residual capacity % | Thermal safety |
|---|---|---|---|---|
| Reference Example 1 | 1012 mAh | 82% | 75% | ○ |
| Reference Example 2 | 995 mAh | 86% | 78% | ○ |
| Reference Example 3 | 1005 mAh | 85% | 78% | ○ |
| Example 4 | 992 mAh | 89% | 85% | ○ |
| Reference Example 5 | 1003 mAh | 88% | 83% | ○ |
| Reference Example 6 | 1082 mAh | 86% | 82% | ○ |
| Reference Example 7 | 1250 mAh | 80% | 73% | ○ |
| Reference Example 8 | 1015 mAh | 85% | 78% | ○ |
| Reference Example 9 | 1018 mAh | 89% | 82% | ○ |
| Reference Example 10 | 1021 mAh | 81% | 80% | ○ |
| Comparative Example 1 | 982 mAh | 65% | 55% | × |

(continued)

|  | Initial capacity | Discharge power | 1000 cycle residual capacity % | Thermal safety |
|---|---|---|---|---|
| Comparative Example 2 | Battery function: No Good (NG) | | | |
| Comparative Example 3 | Battery function: NG | | | |
| Comparative Example 4 | Battery function: NG | | | |
| Comparative Example 5 | 750 mAh | 32% | 15% | $\times$ |

Initial capacities of the batteries in Example 4 and Reference Examples 1 to 3 and 5 to 10 were from 982 mAh to 1250 mAh and it was confirmed that the initial capacities of the batteries in Example 4 and Reference Examples 1 to 3 and 5 to 10 were higher than those measured for the batteries of the Comparative Examples 1 and 5, i.e., a range of 750 mAh to 982 mAh. Furthermore, since the initial capacity of Reference Example 1 using an aqueous-based Li-ion electrolyte was higher than that of Comparative Example 1 using an organic-based electrolyte, and since thermal safety was improved thus improving stability of the battery, safety parts may be removed in the corresponding secondary battery.

$LiFe_{0.98}Sn_{0.02}PO_4$ containing 2% Sn was used as a positive electrode active material in Reference Example 2. $Li_4Ti_{4.98}Al_{0.02}O_{12}$ containing 2% Al was used as a negative electrode active material in Reference Example 3. When Reference Examples 2 and 3 were compared with Reference Example 1, it may be understood that discharge powers and residual capacities were improved in Reference Examples 2 and 3.

Furthermore, the same positive electrode active material as in Reference Example 1 was coated with cobalt oxide (CoO) in Example 4, and the same negative electrode active material as in Reference Example 1 was coated with cobalt oxide (CoO) in Reference Example 5 and the discharge powers and residual capacities were improved in Example 4 and Reference Example 5 with respect to Reference Example 1. Therefore, it is shown that discharge power and residual capacity were greater when the positive electrode active material or the negative electrode active material were coated with CoO. Thus CoO is proven to function as a conductive agent. Therefore, the lithium secondary battery according to the embodiments disclosed in Example 4 and Reference Examples 2, 3, and 5 may have high input and output performance.

Furthermore, it may be understood that initial capacity, discharge power, residual capacity, and thermal safety of the battery of Reference Example 6 were improved while the electrode plate known not to affect the capacity of the battery was made to be thicker than in Reference Example 1.

In Reference Example 7, the electrode coating portions known to affect the capacity of the battery were formed to be thicker than those of Reference Example 1. As a result, the initial capacity of the battery in Reference Example 7 was higher than in Reference Example 1. However, even in the case that the electrode coating portions was formed to be thick, initial capacity, discharge power, and residual capacity may decrease and thermal safety are not improved when the organic-based electrolyte was used (Comparative Example 5).

Potassium hydroxide was added to the electrolyte in Reference Example 8. When compared with Reference Example 1, in which potassium hydroxide was not added, it is shown that initial capacity, discharge power, residual capacity, and thermal safety of the battery were improved. It is believed that in the presence of potassium hydroxide (Reference Example 8) the ionic conductivity thereof was improved in comparison to that of Reference Example 1.

When Reference Example 9 was compared with Reference Example 1, it is shown that the higher the concentration of the electrolyte was, the more improved the initial capacity, discharge power, and residual capacity of the battery were.

Since the PE separator was surface treated by sulfonation ($-SO_4H$) in Reference Example 10, it is shown that initial capacity, and residual capacity of the battery were improved with respect to Reference Example 1 because the water wetting properties of the PE separator were improved. This is to be compared to Comparative Example 4 in which the PE separator did not lead the battery to function.

The battery did not function in the battery characteristic test when lithium cobalt oxide ($LiCoO_2$) was used as a positive electrode active material (Comparative Example 2). Furthermore, the battery did not function in the battery characteristic test when Graphite was used as a negative electrode active material (Comparative Example 3). Moreover, the battery did not function in the battery characteristic test when a PE material without surface treatment was used as a separator (Comparative Example 4).

According to the present embodiments, thermal safety was maintained when an aqueous-based Li ion electrolyte was used. Therefore, parts of safety measures may be mostly removed in the lithium secondary battery of the present embodiments.

Since the electrode coating portions affecting the capacity of the battery may be formed to be thick in the lithium secondary battery of the present embodiments, high voltage and high capacity may be advantageously obtained.

The lithium secondary battery according to the invention has stable characteristics at an average voltage of 2 V and may be used without deteriorating in a high-temperature environment. In addition, charge characteristics in a low-temperature environment are better than those of a typical lithium ion battery.

A Li ion-containing aqueous solution is used in the lithium secondary battery according to the invention and thus, density of the electrode may be high in comparison to the case that an organic-based electrolyte is used. Since the electrode may be formed to be thick, high energy density may be advantageously obtained.

Moreover, since the lithium secondary battery according to the invention has high ionic conductivity, high input and output performance are advantageously possible.

Example embodiments have been disclosed herein, and although specific terms are employed, they are used and are to be interpreted in a generic and descriptive sense. Accordingly, it will be understood by those of ordinary skill in the art that various changes in form and details may be made without departing from the invention as defined in the appended claims.

**Claims**

1.  A lithium secondary battery comprising:

    a positive electrode;
    a negative electrode;
    a separator disposed between the positive electrode and the negative electrode; and
    an electrolyte,
    wherein the positive electrode comprises one or more positive electrode active materials selected from the group consisting of $LiFe_xM_yPO_4$, $Li_2Fe_xM_yP_2O_7$, $Li_3Fe_xM_y(PO_4)_3$, and $LiFe_xM_yO_2$, and coated on at least one surface of a positive current collector, where M is at least one or more selected from the group consisting of Co, Ni, Mn, Al, Sn, and Sb,

    $$0 < x \leq 1,$$

    $$0 \leq y < 1,$$

    wherein the negative electrode comprises one or more negative electrode active materials selected from the group consisting of $Li_4(Ti_pN_q)_5O_{12}$ and $Li_2(Ti_pN_q)_3O_7$, and coated on at least one surface of a negative current collector, where N is at least one or more selected from the group consisting of Co, Ni, Mn, Al, Sn, and Sb,

    $$0 < p \leq 1,$$

    $$0 \leq q < 1,$$

    and
    the electrolyte comprises a Li ion-containing aqueous solution,
    **characterized in that** the coating of the positive electrode comprising positive electrode active material includes one or more conductive agents selected from the group consisting of Co, Ni, Cu, and cobalt oxide.

2.  The lithium secondary battery according to claim 1, wherein the coating of the negative electrode comprises negative electrode active material further includes one or more conductive agents selected from the group consisting of Co, Ni, Cu, and cobalt oxide.

3.  The lithium secondary battery according to any one of claims 1 to 2, wherein the negative current collector and/or the positive current collector has a mesh shape.

4.  The lithium secondary battery according to any one of claims 1 to 3, wherein a part of the negative current collector and/or the positive current collector comprises a plurality of pores having a diameter of 0.1 mm to 0.6 mm, the pores being capable of housing the positive electrode active material or the negative electrode active material.

5. The lithium secondary battery according to any one of claims 1 to 4, wherein the negative current collector and/or the positive current collector is an aluminum foil.

6. The lithium secondary battery according to any one of claims 1 to 5, wherein the negative current collector and/or the positive current collector has a roughness in the range of from 0.05 mm to 0.6 mm.

7. The lithium secondary battery according to any one of claims 1 to 6, wherein the separator is a non-woven fabric.

8. The lithium secondary battery according to any one of claims 1 to 7, wherein the thickness of the positive electrode is in the range of from 0.1 mm to 3.0 mm and/or the thickness of the negative electrode is in the range of from 0.1 mm to 3.0 mm.

9. The lithium secondary battery according to any one of claims 1 to 8, wherein the electrolyte comprises LiOH.

10. The lithium secondary battery according to claim 9, wherein the concentration of LiOH is in the range of from 1 mol/L to 6 mol/L.

11. The lithium secondary battery according to any one of claims 9 and 10, wherein the electrolyte further comprises KOH and/or NaOH.

12. The lithium secondary battery according to any one of claims 1 to 11, wherein the separator has a polyolefin-based material surface which was treated by one selected from the group consisting of a plasma treatment, a corona discharge treatment, a sulfonation treatment, and an acrylic acid graft treatment.

13. The lithium secondary battery according to any one of claims 1 to 12, wherein the positive electrode active material is LiFePO4-CoO.

14. The lithium secondary battery according to any one of claims 1 to 13, wherein the negative electrode is chosen from the group consisting of $Li_4Ti_5O_{12}$, $Li_4Ti_5O_{12}$-CoO, and $Li_4Ti_{4.98}Al_{0.02}O_{12}$.

**Patentansprüche**

1. Lithiumsekundärbatterie, umfassend:

   eine positive Elektrode;
   eine negative Elektrode;
   einen Separator, angeordnet zwischen der positiven Elektrode und der negativen Elektrode; und
   einen Elektrolyten,
   wobei die positive Elektrode ein oder mehrere Positivelektroden-Aktivmaterialien, ausgewählt aus der Gruppe bestehend aus $LiFe_xM_yPO_4$, $Li_2Fe_xM_yP_2O_7$, $Li_3Fe_xM_y(PO_4)_3$ und $LiFe_xM_yO_2$ und aufgebracht auf mindestens einer Oberfläche eines positiven Stromkollektors, umfasst, wobei M mindestens eines oder mehrere, ausgewählt aus der Gruppe bestehend aus Co, Ni, Mn, Al, Sn und Sb, ist,

$$0 < x \leq 1,$$

$$0 \leq y < 1,$$

   wobei die negative Elektrode ein oder mehrere Negativelektroden-Aktivmaterialien, ausgewählt aus der Gruppe bestehend aus $Li_4(Ti_pN_q)_5O_{12}$ und $Li_2(Ti_pN_q)_3O_7$ und aufgebracht auf mindestens einer Oberfläche eines negativen Stromkollektors, umfasst, wobei N mindestens eines oder mehrere, ausgewählt aus der Gruppe bestehend aus Co, Ni, Mn, Al, Sn und Sb, ist,

$$0 < p \leq 1,$$

$$0 \leq q < 1,$$

und

der Elektrolyt eine Li-Ionen-haltige wässrige Lösung umfasst,

**dadurch gekennzeichnet, dass** die Positivelektroden-Aktivmaterial umfassende Beschichtung der positiven Elektrode ein oder mehrere leitfähige Mittel, ausgewählt aus der Gruppe bestehend aus Co, Ni, Cu und Cobaltoxid, enthält.

2. Lithiumsekundärbatterie nach Anspruch 1, wobei die Beschichtung der negativen Elektrode, die Negativelektroden-Aktivmaterial umfasst, weiterhin ein oder mehrere leitfähige Mittel, ausgewählt aus der Gruppe bestehend aus Co, Ni, Cu und Cobaltoxid, enthält.

3. Lithiumsekundärbatterie nach einem der Ansprüche 1 bis 2, wobei der negative Stromkollektor und/oder der positive Stromkollektor eine Siebform aufweist.

4. Lithiumsekundärbatterie nach einem der Ansprüche 1 bis 3, wobei ein Teil des negativen Stromkollektors und/oder des positiven Stromkollektors eine Mehrzahl von Poren mit einem Durchmesser von 0,1 mm bis 0,6 mm umfasst, wobei die Poren das Positivelektroden-Aktivmaterial oder das Negativelektroden-Aktivmaterial aufnehmen können.

5. Lithiumsekundärbatterie nach einem der Ansprüche 1 bis 4, wobei der negative Stromkollektor und/oder der positive Stromkollektor eine Aluminiumfolie ist.

6. Lithiumsekundärbatterie nach einem der Ansprüche 1 bis 5, wobei der negative Stromkollektor und/oder der positive Stromkollektor eine Rauigkeit im Bereich von 0,05 mm bis 0,6 mm aufweist.

7. Lithiumsekundärbatterie nach einem der Ansprüche 1 bis 6, wobei der Separator ein Vliesstoff ist.

8. Lithiumsekundärbatterie nach einem der Ansprüche 1 bis 7, wobei die Dicke der positiven Elektrode im Bereich von 0,1 mm bis 3,0 mm liegt und/oder die Dicke der negativen Elektrode im Bereich von 0,1 mm bis 3,0 mm liegt.

9. Lithiumsekundärbatterie nach einem der Ansprüche 1 bis 8, wobei der Elektrolyt LiOH umfasst.

10. Lithiumsekundärbatterie nach Anspruch 9, wobei die LiOH-Konzentration im Bereich von 1 mol/l bis 6 mol/l liegt.

11. Lithiumsekundärbatterie nach einem der Ansprüche 9 und 10, wobei der Elektrolyt weiterhin KOH und/oder NaOH umfasst.

12. Lithiumsekundärbatterie nach einem der Ansprüche 1 bis 11, wobei der Separator eine Oberfläche aus einem Material auf Polyolefinbasis, die behandelt wurde mit einer, ausgewählt aus der Gruppe bestehend aus einer Plasmabehandlung, einer Koronaentladungsbehandlung, einer Sulfonierungsbehandlung und einer Acrylsäurepfropfbehandlung, aufweist.

13. Lithiumsekundärbatterie nach einem der Ansprüche 1 bis 12, wobei das Positivelektroden-Aktivmaterial $LiFePO_4$-CoO ist.

14. Lithiumsekundärbatterie nach einem der Ansprüche 1 bis 13, wobei die negative Elektrode ausgewählt ist aus der Gruppe bestehend aus $Li_4Ti_5O_{12}$, $Li_4Ti_5O_{12}$-CoO und $Li_4Ti_{4,98}Al_{0,02}O_{12}$.

**Revendications**

1. Batterie secondaire au lithium comprenant :

une électrode positive ;
une électrode négative ;
un séparateur disposé entre l'électrode positive et

l'électrode négative ; et

un électrolyte,

dans laquelle l'électrode positive comprend un ou plusieurs matériaux actifs d'électrode positive choisis dans le groupe constitué par $LiFe_xM_yPO_4$, $Li_2Fe_xM_yP_2O_7$, $Li_3Fe_xM_y(PO_4)_3$, et $LiFe_xM_yO_2$, et est revêtue sur au moins une surface d'un collecteur de courant positif, où M est au moins un ou plusieurs éléments choisis dans le groupe constitué par Co, Ni, Mn, Al, Sn et Sb,

$$0 < x \leq 1,$$

$$0 \leq y < 1,$$

dans laquelle l'électrode négative comprend un ou plusieurs matériaux actifs d'électrode négative choisis dans le groupe constitué par $Li_4(Ti_pN_q)_5O_{12}$ et $Li_2(Ti_pN_q)_3O_7$, et est revêtue sur au moins une surface d'un collecteur de courant négatif, où N est au moins un ou plusieurs éléments choisis dans le groupe constitué par Co, Ni, Mn, Al, Sn et Sb,

$$0 < p \leq 1,$$

$$0 \leq q < 1,$$

et

l'électrolyte comprend une solution aqueuse contenant l'ion Li,

**caractérisée en ce que** le revêtement de l'électrode positive comprenant le matériau actif d'électrode positive comprend un ou plusieurs agents conducteurs choisis dans le groupe constitué par Co, Ni, Cu et l'oxyde de cobalt.

2. Batterie secondaire au lithium selon la revendication 1, dans laquelle le revêtement de l'électrode négative comprenant le matériau actif d'électrode négative comprend en outre un ou plusieurs agents conducteurs choisis dans le groupe constitué par Co, Ni, Cu et l'oxyde de cobalt.

3. Batterie secondaire au lithium selon l'une quelconque des revendications 1 à 2, dans laquelle le collecteur de courant négatif et/ou le collecteur de courant positif a une forme de treillis.

4. Batterie secondaire au lithium selon l'une quelconque des revendications 1 à 3, dans laquelle une partie du collecteur de courant négatif et/ou du collecteur de courant positif comprend une pluralité de pores ayant un diamètre de 0,1 mm à 0,6 mm, les pores étant capables d'héberger le matériau actif d'électrode positive ou le matériau actif d'électrode négative.

5. Batterie secondaire au lithium selon l'une quelconque des revendications 1 à 4, dans laquelle le collecteur de courant négatif et/ou le collecteur de courant positif est une feuille d'aluminium.

6. Batterie secondaire au lithium selon l'une quelconque des revendications 1 à 5, dans laquelle le collecteur de courant négatif et/ou le collecteur de courant positif a une rugosité dans la plage de 0,05 mm à 0,6 mm.

7. Batterie secondaire au lithium selon l'une quelconque des revendications 1 à 6, dans laquelle le séparateur est un tissu non tissé.

8. Batterie secondaire au lithium selon l'une quelconque des revendications 1 à 7, dans laquelle l'épaisseur de l'électrode positive est dans la plage de 0,1 mm à 3,0 mm et/ou l'épaisseur de l'électrode négative est dans la plage de 0,1 mm à 3,0 mm.

9. Batterie secondaire au lithium selon l'une quelconque des revendications 1 à 8, dans laquelle l'électrolyte comprend LiOH.

**10.** Batterie secondaire au lithium selon la revendication 9, dans laquelle la concentration de LiOH est dans la plage de 1 mol/L à 6 mol/L.

**11.** Batterie secondaire au lithium selon l'une quelconque des revendications 9 et 10, dans laquelle l'électrolyte comprend en outre KOH et/ou NaOH.

**12.** Batterie secondaire au lithium selon l'une quelconque des revendications 1 à 11, dans laquelle le séparateur a une surface de matériau à base de polyoléfine qui a été traitée par un traitement choisi dans le groupe constitué par un traitement plasma, un traitement par décharge à effet couronne, un traitement de sulfonation, et un traitement de greffage à l'acide acrylique.

**13.** Batterie secondaire au lithium selon l'une quelconque des revendications 1 à 12, dans laquelle le matériau actif d'électrode positive est $LiFePO_4$-CoO.

**14.** Batterie secondaire au lithium selon l'une quelconque des revendications 1 à 13, dans laquelle l'électrode négative est choisie dans le groupe constitué par $Li_4Ti_5O_{12}$, $Li_4Ti_5O_{12}$-CoO et $Li_4Ti_{4,98}Al_{0,02}O_{12}$.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009087742 A

- JP 2006073259 A